# EUROPÄISCHE PATENTANMELDUNG

(11) **EP 0 849 282 A2**
(43) Veröffentlichungstag der Anmeldung: **24.06.1998**
(21) Anmeldenummer: 97810961.9
(22) Anmeldetag: 10.12.1997
(51) Int. Cl.: C08C 19/24, C08C 19/20, C08F 8/40, C08F 8/34, C08G 61/08, C10M 159/12, C10M 143/00

(54) **Polymere multifunktionelle Schmierstoffadditive**

(30) Priorität: 19.12.1996 CH 3126/96
(71) Anmelder: Ciba Specialty Chemicals Holding Inc., 4057 Basel (CH)
(72) Erfinder: Camenzind, Hugo, 3014 Bern (CH); Dubs, Paul, 1700 Fribourg (CH)

(57) **Zusammenfassung**

Es werden beschrieben: Als Schmier- und Kraftstoffadditive geeignete Produkte, erhältlich durch Umsetzung eines mehrfach ungesättigten Polymers, z. B. Polybutadien, Polyisopren, ringöffnend polymerisiertes Polycyclooctenamer oder Polynorbomen, mit mindestens einer enophilen Verbindung aus den Gruppen der Dihydrocarbyldithiophosphorsäuren, Dihydrocarbylmonothiophosphorsäuren, Dihydrocarbylphosphorsäuren oder Mercaptane.

## Beschreibung

Die vorliegende Erfindung betrifft metallfreie, polymere Schmierstoffadditive, Verfahren zu deren Herstellung, Schmiermittel- und Kraftstoffzusammensetzungen, die diese enthalten, und deren Verwendung als Additive, z.B. in Motorenölen, Turbinenölen, Getriebeölen, Hydraulikflüssigkeiten, Metallbearbeitungsflüssigkeiten, Schmierfetten und flüssigen Kraftstoffen.

Beim Betrieb von Verbrennungsmotoren hat es sich als günstig erwiesen, metall- und damit aschearme Schmierstoffe zu verwenden. Man sucht daher nach metallfreien Additiven oder Additivkombinationen, welche der guten Antioxidations- und Verschleißschutzwirkung der bisher verwendeten Zinkdialkyldithiophosphate nahekommen.

US 3,268,480 beschreibt Polyoximinogruppen enthaltende Copolymere, beispielsweise hergestellt über die Polymerisation von Acrolein und Methacrylat und nachfolgender Umsetzung mit Hydroxylamin. Diese funktionalisierten öllöslichen Copolymere mit Molekulargewicht 50 000 - 500 000 besitzen detergierende und verschleißmindernde Eigenschaften in Benzin- und Dieselmotorenölen.

US 3 328 360 beschreibt die Herstellung von polymeren Dialkyldithiophosphaten über die Umsetzung von P₄S₁₀ mit bifunktionellen Verbindungen wie Diolen oder Diaminen. Diese "Phosmere" und ihre Derivate haben antioxidative und verschleißmindemde Eigenschaften.

US 3 804 816 beschreibt eine Methode zur Herstellung von Copolymeren von Ethylen- und Vinyl-Zinnverbindungen, die verschleißmindemde Wirkung haben.

US 4 107 059 beschreibt Polymere von 1,2,4-Thiadiazol und Schmiermittelzusammensetzungen, die diese Verbindungen als verschleißmindernde Additive enthalten.

US 4 800 028 beschreibt Schmiermittelzusammensetzungen, die polymere Dimercaptothiadiazole und/oder polymere Cyanodithioimidocarbonate enthalten. Diese polymeren Verbindungen zeigen ebenfalls gute verschleißmindemde Eigenschaften.

US 5 116 523 beschreibt Schwefeladdukte von Poly-α-olefinen. Diese polymeren Mischungen von Sulphiden, Disulphiden und Polysulphiden erlauben die Formulierung von zinkdialkyldithiophosphatfreien Schmiermittelzusammensetzungen.

US 5 160 349 beschreibt Kraftstoffzusammensetzungen, die als Verschleißschutzkomponente Reaktionsprodukte von Olefin/Maleinsäureanhydrid-Copolymeren mit Azolheterocyclen umfassen.

US 5 135 671 beschreibt multifunktionelle Viskositätsindexverbesserer auf der Basis von linearen Olefincopolymeren, die mit Vinylbenzylchlorid gepfropft und mit N-Phenyl-p-phenylendiamin amidiert sind. Diese polymeren Verbindungen wirken als Viskositätsindex-verbesserer, Dispergatoren, Antioxidantien und Verschleißschutzmittel.

US 5 274 102 beschreibt Copolymere von Olefinen, α,ß-ungesättigten Dicarbonsäuren und olefinischen Glycidylverbindungen, die mit glycidylreaktiven Stickstoff-, Sauerstoff-, Phosphor- und/oder Schwefelverbindungen derivatisiert sind, beispielsweise mit Dialkyldithiophosphorsäure, Dialkylphosphorsäure, Dimercaptothiadiazol oder Carbazol. Diese polymeren Verbindungen zeigen gute verschleißmindemde Aktivität.

US 5 472 627 beschreibt Co- oder Terpolymere, die mit olefinischen Carbonsäuren oder Säureanhydriden gepfropft und mit Amino-thiadiazolen imidiert sind. Diese polymeren Additive besitzen Aktivitäten als Viskositätsindexverbesserer, Antioxidantien, Dispergatoren und Verschleißschutzmittel.

EP 673 943 beschreibt metallfreie Dithiophosphorsäureadditionsprodukte aus mono- oder polycyclischen ein- oder mehrfach ungesättigten Kohlenwasserstoffen und Alkyl- bzw. Alkyl/ Aryl-dithiophosphorsäuren. Diese Phosphor/Schwefel funktionalisierten, monomeren Verbindungen zeigen Wirkung als Antioxidantien und Verschleißschutzmittel.

Es wurde gefunden, daß die im folgenden beschriebenen metallfreien polymeren Phosphate oder Dithiophosphate und/oder polymeren metall- und phosphorfreien Schwefelverbindungen (Sulphide) als multifunktionelle Schmierstoff- oder Kraftstoffadditive besonders gut geeignet sind, die bisher verwendeten Zinkverbindungen ganz oder teilweise zu ersetzen.

Polymere Verbindungen sind schwerflüchtig (tiefer Dampfdruck) und schlecht mit Wasser extrahierbar. Dies bedeutet einen großen ökologischen Vorteil gegenüber den monomeren Öladditiven.

Die Erfindung betrifft somit Produkte, die aus der Umsetzung eines mehrfach ungesättigten Polymers, vorzugsweise mit Molekulargewicht (Zahlenmittel) Mₙ: ca. 500 - 500 000, mit mindestens einer enophilen Verbindung aus der Gruppen der Dihydrocarbylphosphorsäuren, Dihydrocarbyldithiophosphorsäuren, Dihydrocarbylmonothiophosphorsäuren und Mercaptane erhältlich sind.

Bevorzugt eingesetzte Polymere haben ein Molekulargewicht (Zahlenmittel) von Mₙ: ca. 1000-200 000, insbesondere ca. 1000 - 50 000, z.B. ca. 1000 - 20 000, vor allem ca. 1000 - 10 000.

Bei den mehrfach ungesättigten Polymeren handelt es sich um polymere Verbindungen, welche unter Verwendung von Monomeren mit zwei oder mehr C=C-Doppelbindungen hergestellt wurden und bei denen somit nach der Polymerisation oder Copolymerisation in mindestens einer wiederkehrenden Struktureinheit eine Doppelbindung vorhanden ist.

Beispiele dafür sind unvernetzte Polyisoprene oder Polybutadiene, z.B. Krasol® LB 3000 mit einem Molekulargewicht Mn von 2300 -3000, Copolymere von Mono- und Diolefinen, wie z.B. Propylen-Butadien-, Styrol-Butadien- oder Acrylnitril-Butadien-Copolymere, Terpolymere wie z.B. Styrol-Butadien-Alkylacrylat- bzw. -Methacrylat- oder Acrylnitril-Alkylmethacrylat-Butadien-Terpolymere, Terpolymere mit Ethylen, Propylen und einem Dien, wie Hexadien, Dicyclopentadien, Norbornadien oder Ethylidennorbomen, Blockcopolymere des Styrols wie Styrol-Butadien-Styrol oder Styrol-lsopren-Styrol, Pfropfcopolymere von Styrol oder α-Methylstyrol auf Polybutadien, Polybutadiene mit endständigen Hydroxygruppen, z.B. KRASOL LBH 3000, oder Polyurethane, die sich von diesen über die Reaktion mit aromatischen Polyisocyanaten ableiten, lineare Polycyclopentadiene oder durch ringöffnende Metathese, polymerisierte, cyclische Olefine, z.B. Polyoctenamere, z.B. Vestenamer® L 3000 (Hüls) mit einem Molekulargewicht Mₙ von ca. 2300 - 3000 oder Polynorbornene, z.B. vom Typ Norsorex®(Nippon Zeon), sowie alle mit Cyclopentadien nach der Diels-Alder-Methode gepfropften mehrfach ungesättigten polymeren Grundverbindungen oben genannter Art. Derartige Polymere sind dem Fachmann bekannt und größtenteils im Handel erhältlich. Besonders vorteilhaft verwendet man Homo- und Copolymere von Di-olefinen, z.B. Butadien, Isopren oder Pentadien, sowie von cyclischen, gegebenenfalls mehrkernigen Diolefinen, z.B. Dicyclopentadien oder Norbornen sowie ringöffend polymerisierte cyclische Olefine, z.B. Polyoctenamere oder Polynorbornene. Bevorzugt werden von den oben genannten Polymeren beispielsweise Polybutadien, Polyisopren, ringöffnend polymerisiertes Polycyclooctenamer oder Polynorbomen eingesetzt.

Ganz besonders bevorzugt setzt man Polybutadien (Mₙ: ca. 1000 - 200 000), Polyisopren (Mₙ: ca. 1000 - 200 000) oder Polycyclooctenamer (Mₙ: ca. 1000 - 200 000) ein.

Die einsetzbaren enophilen Verbindungen entsprechen beispielsweise den Formeln: 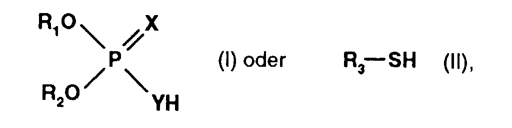 worin X und Y unabhängig voneinander S oder O;
R¹ und R² unabhängig voneinander C₃-C₁₈-Alkyl, C₅-C₁₂-Cycloalkyl, C₅-C₆-Cycloalkylmethyl, C₉-C₁₀ Bicycloalkylmethyl, C₉-C₁₀-Tricycloalkylmethyl, Phenyl, C₇-C₂₄-Alkylphenyl oder R¹ und R² zusammen die Gruppe der Teilformel: 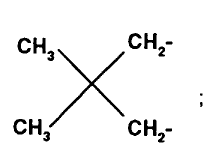
R³ unsubstituiertes oder mit OH oder/und COOH substituiertes C₁-C₂₂-Alkyl, oder durch -O-, -S-, -NR⁴-, -C(=O)-, -C(=O)-O-, -O-(C=O)- oder -C(=O)-NR₄- unterbrochenes C₂-C₂₂-Alkyl; und R⁴ H oder C₁₋₁₈-Alkyl sind.
R¹ und R² mit der Bedeutung C₉-C₁₀-Bicycloalkyl-methyl ist z.B. Decalinylmethyl. R¹ und R² mit der Bedeutung C₉-C₁₀-Tricycloalkyl-methyl haben vorzugsweise die Bedeutung einer Gruppe der Formel:

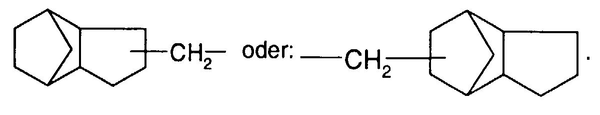

Durch -O- oder -S- unterbrochene Alkylreste enthalten insbesondere Struktureinheiten wie -CH₂CH₂-O-CH₂CH₂-, -CH₂CH₂-S-CH₂CH₂- oder -O-(CH₂)₆-O-.

Durch -C(=O)-O-, -O-C(=O)- oder -C(=O)-NR₄- unterbrochene Reste ergeben Ester- und Amidgruppen.

Hydrocarbyl bedeutet einen Kohlenwasserstoffrest, z.B. C₁-C₃₀-(Cyclo)-Alkyl, C₆-C₁₀-Aryl, C₇-C₂₀-Alkaryl oder C₇-C₁₂-Aralkyl, bzw. die für R₁ und R₂ angegebenen Gruppen.

Bevorzugt sind in Verbindungen der Formeln I und II:

Mindestens eine der Gruppen X und Y ist Schwefel, insbesondere X und Y sind Schwefel; R¹ und R² sind unabhängig voneinander C₃₋₁₈-Alkyl, C₅₋₆-Cydoalkyl oder C₇₋₁₈-Alkylphenyl; und R³ ist C₃-C₁₈-Alkyl oder mit -COOH oder -OH substituiertes C₁-C₁₂-Alkyl oder durch -C(=O)-O- unterbrochenes C₃-C₁₈-Alkyl.

Besonders bevorzugt sind R¹ und/oder R² mit den Bedeutungen i-Propyl, -Butyl oder 2-Ethyl-hexyl und R³ mit den Bedeutungen C₃-C₁₈-Alkyl , -CH₂-C(=O)-OH, -CH₂-CH₂-C(=O)-OH, -CH₂-C(=O)-O-C₁-C₁₂-Alkyl, -CH₂-CH₂-C(=O)-O-C₁-C₁₂-Alkyl oder -CH₂CH₂OH.

Die Herstellung der erfindungsgemäßen Verbindungen erfolgt durch Umsetzung des mehrfach ungesättigten Polymers mit einem oder mehreren Dihydrocarbylphosphorsäuren bzw. Dihydrocarbyl(di)thiophosphorsäuren und/oder einem oder mehreren Mercaptanen. Dabei wird die Säure oder das Mercaptan in bekannter Weise an die Doppelbindugen addiert. Es kann sich um radikalische oder ionische Additionen an einen Teil der Doppelbindungen des Polymers handeln. Bevorzugt arbeitet man radikalisch, z.B. mit einem geeigneten Starter, z.B einem Hydroperoxid, einem Perester, oder einer Azoverbindung wie Azoisobutyronitril. Beispielsweise wird die Reaktion in unpolaren, organischen Lösungsmitteln, z.B. Kohlenwasserstoffen, wie Hexan, Benzol oder Toluol, bei Temperaturen zwischen Raumtemperatur und 150°C durchgeführt. Wenn mehrere verschiedenartige Komponenten addiert werden, setzt man vorzugsweise zunächst die Mercaptoverbindung und danach die Phosphorphorsäureverbindung ein. In der Regel werden nicht alle Doppelbindungen des Polymers reagieren. Eine solche Sättigung ist weder aus Gründen der Löslichkeit, Stabilität und sterischen Verhältnisse möglich noch wird sie angestrebt. Bei den in den Beispielen verwendeten Mengen ist davon auszugehen, daß das Produkt stets noch einen Anteil freier Doppelbindungen aufweist. In einer bevorzugten Ausführungsform werden erfindungsgemäße Produkte so hergestellt, daß das Polymer mit mindestens 2, z.B. 2 bis 4, enophilen Verbindungen der Formeln I oder/und II, umgesetzt wird.

Die erfindungsgemäßen Produkte sind insbesondere als Schmiermittel- und Kraftstoffadditive geeignet. Das mittelmolekulare polymere Grundgerüst Gruppen führt zu geringer Flüchtigkeit bei guter Öl- und Fettlöslichkeit und kann eine Reibwertverbesserung bewirken. Die Produkte weisen gute Antiverschleißwirkung auf. Zusätzlich besitzen sie Antioxidationswirkung. Es handelt sich somit um multifunktionelle Additive.

Gegenstände der Erfindung sind ebenfalls:
Zusammensetzungen enthaltend einen Schmier- oder Kraftstoff sowie mindestens ein erfindungsgemäßes Produkt, insbesondere Schmier- oder Kraftstoffzusammensetzungen, enthaltend einen Stoff aus den Gruppen der Motorenöle, Turbinenöle, Getriebeöle, Hydraulikflüssigkeiten, Metallbearbeitungsflüssigkeiten, Schmierfette, Diesel- und Ottokraftstoffe sowie mindestens ein Reaktionsprodukt wie oben beschrieben;
Verfahren zur Verbesserung der Gebrauchseigenschaften von Schmier- oder Kraftstoffen, gekennzeichnet durch die Zugabe mindestens eines erfindungsgemäßen Reaktionsprodukts wie oben beschrieben;
Die Verwendung von erfindungsgemäßen Produkten als Additive in Schmier- oder Kraftstoffen;
Konzentrate enthaltend ein oleophiles Lösungsmittel und mindestens ein Reaktionsprodukt wie oben beschrieben. Solche Lösungsmittel sind in der Regel Mineralölfraktionen oder Esteröle oder deren Gemische, z.B. Adipinsäure-bis-2-ethylhexylester, oder aber der Schmier- oder Kraftstoff selbst, z.B. Mineralölfraktionen wie Benzin und Dieselöl, tierische oder pflanzliche Öle oder synthetische Öle. Beispiele dafür sind den folgenden Absätzen zu entnehmen.

Die in Frage kommenden Schmierstoffe, Metallbearbeitungs- und Hydraulikflüssigkeiten basieren beispielsweise auf mineralischen oder synthetischen Ölen oder Mischungen davon. Die Schmierstoffe sind dem Fachmann geläufig und in der einschlägigen Fachliteratur, wie beispielsweise in Dieter Klamann, "Schmierstoffe und verwandte Produkte" (Verlag Chemie, Weinheim, 1982), in Schewe-Kobek, "Das Schmiermittel-Taschenbuch" (Dr. Alfred Hüthig-Verlag, DE-Heidelberg, 1974), in W.J. Bartz (ed.) "Additive für Schmierstoffe" (expert-Verlag, DE-Renningen-Malmsheim 1994) und in "Ullmanns Enzyklopädie der technischen Chemie", Bd.13, Seiten 85-94 (Verlag Chemie, DE-Weinheim, 1977) beschrieben.

Die Schmierstoffe sind insbesondere Öle und Fette, beispielsweise basierend auf Mineralöl. Bevorzugt sind Öle.

Eine weitere Gruppe von Schmierstoffen, die zur Anwendung gelangen können, sind pflanzliche oder tierische Öle, Fette, Talge und Wachse oder deren Gemische untereinander oder Gemische mit den erwähnten mineralischen oder synthetischen Ölen. Pflanzliche und tierische Öle, Fette, Talge und Wachse sind beispielsweise Palmkernöl, Palmöl, Olivenöl, Rüböl, Rapsöl, Leinöl, Erdnußöl, Sojabohnenöl, Baumwollöl, Sonnenblumenöl, Kürbiskemöl, Kokosnußöl, Maisöl, Rizinusöl, Baumnußöl und Mischungen davon, Fischöle, Talge von Schlachttieren wie Rindertalg, Klauenfett und Knochenöl sowie deren modifizierte, epoxidierte und sulfoxidierte Formen, beispielsweise epoxidiertes Sojabohnenöl.

Beispiele von synthetischen Schmierstoffen umfassen Schmierstoffe auf der Basis aliphatischer oder aromatischer Carboxylester, polymerer Ester, Polyalkylenoxide, Phosphorsäureester, Poly-alpha-olefine oder Silicone, eines Diesters einer zweiwertigen Säure mit einem einwertigen Alkohol, z.B. Dioctylsebacat oder Dinonyladipat, eines Triesters von Trimethylolpropan mit einer einwertigen Säure oder mit einem Gemisch solcher Säuren, z.B. Trimethylolpropantripefargonat, Trimethylolpropantricaprylat oder Gemische davon, eines Tetraesters von Pentaerythrit mit einer einwertigen Säure oder mit einem Gemisch solcher Säuren, z.B. Pentaerythrit-tetracaprylat, oder eines komplexen Esters von einwertigen und zweiwertigen Säuren mit mehrwertigen Alkoholen, z.B. ein komplexer Ester von Trimethylolpropan mit Capryl- und Sebacinsäure oder von einem Gemisch davon. Besonders geeignet sind neben Mineralölen z.B. Poly-alpha-Olefine, Schmierstoffe auf Esterbasis, Phosphate, Glycole, Polyglycole und Polyalkylenglycole sowie deren Mischungen mit Wasser.

Metallbearbeitungsflüssigkeiten und Hydraulikflüssigkeiten können auf Basis der gleichen Substanzen hergestellt werden wie vorstehend für die Schmiermittel beschrieben. Häufig handelt es sich dabei auch um Emulsionen solcher Substanzen mit Wasser oder anderen Flüssigkeiten.

Erfindungsgemäße Schmierstoffzusammensetzungen finden z.B. Verwendung in Verbrennungsmotoren, z.B. in Kraftfahrzeugen, ausgerüstet z.B. mit Motoren des Otto-, Diesel-, Zweitakt-, Wankel- oder Orbitaltyps.

Die erfindungsgemäßen Produkte sind gut in Schmierstoffen, Metallbearbeitungs- und Hydraulikflüssigkeiten und Kraftstoffen löslich und sind deshalb als Zusätze zu Schmierstoffen, Metallbearbeitungs- und Hydraulikflüssigkeiten und Kraftstoffen besonders geeignet.

Vorteilhafterweise enthalten die Zusammensetzungen 0,005 bis zu 10,0 Gew.% der erfindungsgemäß hergestellten Produkte, bevorzugt 0,01 - 5,0 Gew.%, insbesondere 0,01 - 2,0 Gew.%.

Die erfindungsgemäß hergestellten Produkte können den Schmierstoffen, Metallbearbeitungs- und Hydraulikflüssigkeiten und Kraftstoffen auf an sich bekannte Weise beigemischt werden. Die Verbindungen sind beispielsweise in Ölen gut löslich. Es ist so auch möglich, einen sogenannten Masterbatch herzustellen, der nach Maßgabe des Verbrauchs auf Einsatzkonzentrationen mit dem entsprechenden Schmierstoff verdünnt werden kann. In solchen Fällen sind auch Konzentrationen über 10 Gew.% möglich.

Die Schmierstoffe, Metallbearbeitungs- und Hydraulikflüssigkeiten und Treibstoffe können zusätzlich weitere Additive enthalten, die zugegeben werden, um ihre Grundeigenschaften noch weiter zu verbessern, gegebenenfalls mit synergistischer Wirkung untereinander und/oder mit den erfindungsgemäßen Produkten. Dazu gehören: weitere Antioxidantien, Metallpassivatoren, Rostinhibitoren, Viskositätsindex-Verbesserer, Stockpunktemiedriger, Dispergiermittel, Detergentien, weitere Hochdruck-Zusätze und Antiverschleiß-Additive und Reibungsverminderer usw.. Solche Additive gibt man in den jeweils dafür üblichen Mengen im Bereich von je etwa 0,01 bis 10,0 Gew.% zu.

Es folgen Beispiele solcher weiteren Zusatzstoffe:

Beispiele für Antioxidantien:
1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(alpha-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthio-methyl-6-methylphenol, 2,4-Di-octylthiomethyl-6-ethylphenol, 2,6-Di-dodecylthiomethyl-4-nonylphenol.
1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, z.B. alpha-Tocopherol, beta-Tocopherol, gamma-Tocopherol, delta-Tocopherol und Mischungen davon (Vitamin E).
1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
1.6. Alkyliden-Bisphenole, z.B. 2,2'-Methylen-bis(6-tert-butyl-4-methylphenol), 2,2'-Methy-len-bis(6-tert-butyl-4-ethylphenol), 2,2'-Methylen-bis[4-methyl-6-(alpha-methylcyclohexyl)phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tertbutylphenol), 2,2'-Ethyliden-bis(6-tert-butyl-4-isobutylphenol), 2,2'-Methylen-bis[6-(alphamethylbenzyl)-4-nonylphenol], 2,2'- Methylen-bis[6-(alpha,alpha-dimethylbenzyl)-4-nonylphenol], 4,4'-Methylen-bis(2,6-di-tert-butylphenol), 4,4'-Methylen-bis(6-tert-butyl-2-methylphenol), 1,1- Bis(5-tert-butyl-4-hydroxy-2-methylphenyl)-butan, 2,6-Bis(3-tert-butyl-5-methyl-2-hydroxybenzyl)-4-methylphenol, 1,1,3.Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1 -Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methyl-phenyl)-4-n-dodecylmercapto-butan, 1,1,5,5-Tetra-(5-tert-butyl-4-hydroxy-2-methylphenyl)-pentan.
1.7. O-, N- und S-Benzylverbindungen, z.B. 3,5,3',5'-Tetra-tert-butyl-4,4'-dihydroxy-dibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecyl-mercaptoethyl-2,2-bis(3,5-di-tert-butyl-4-hyd roxybenzyl)-malonat, Di-[4-(1,1,3,3-tetramethyl-butyl)-phenyl]-2,2-bis(3,5-di-tert-butyl-4-hydroxybenzyl)-malonat.
1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.
1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1 ,3,5-triazin, 2-Oc-tylmercapto-4,6-bis(3,5-di-tert-butyl-4-hydroxyphenoxy)-1 ,3,5-triazin, 2,4,6-Tris(3,5-di-tert-butyl-4-hydroxyphenoxy)-1,2,3-triazin, 1 ,3,5-Tris (3,5-di-tert-butyl-4-hydroxybenzyl)-isocyanurat, 1 ,3,5-Tris(4-tert-butyl-3-hydroxy-2,6-dimethylbenzyl)-isocyanurat, 2,4,6-Tris(3,5-ditert-butyl-4-hydroxyphenylethyl)-1,3,5-triazin, 1,3,5-Tris(3,5-di-tert-butyl-4-hydroxyphenyl-propionyl)-hexahydro-1 ,3,5-triazin, 1 ,3,5-Tris(3,5-dicyclohexyl-4-hydroxybenzyl)-isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäu re-monoethylesters.
1.12. Acylaminophenole, z.B. 4-Hydroxy-laurinsäureanilid, 4-Hydroxystearinsäu reanilid, N-(3,5-di-tert-butyl-4-hydroxyphenyl)-carbaminsäu reoctylester.
1.13. Ester der beta-(3.5-Di-tert-butyl-4-hydroxyphenyl-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der beta-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'- Bis(hydroxyethyl)-oxalsäu rediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der beta-(3.5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanu rat, N, N'-Bis(hydroxyethyl)-oxalsäu rediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1 -phospha-2,6,7-trioxabicyclo-[2.2.2]-octan.
1.17. Amide der beta-(3,5-Di-tert-butyl-4-hydroxyphenyl)-propionsäure, wie z.B. N,N'-Bis(3,5-di-tert-butyl-4-hydroxyphenylpropionyl)-hexamethylendiamin, N,N'-Bis(3,5-di-tert-butyl-4-hyd roxyphenylpropionyl)-trimethylendiamin, N, N'-Bis(3,5-di-tert-butyl-4-hydroxyphenylpropionyl)-hydrazin.
1.18. Ascorbinsäure (Vitamin C).
1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N, N'-di-sec-butyl-p-phenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylamino-phenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1 ,4-diaminobut-2-en, N,N-Bis-(2,2,6,6-tetramethyl-piperidin-4-yl-hexamethylendiamin, Bis-(2,2,6,6-tetramethylpiperidin-4-yl)-seba-cat, 2,2,6,6-Tetramethypiperidin-4-on, 2,2,6,6-Tetramethylpiperidin-4-ol.

### Beispiele für weitere Antioxidantien:

Aliphatische oder aromatische Phosphite, Ester der Thiodipropionsäure oder der Thiodiessigsäure, oder Salze der Dithiocarbamid- oder Dithiophosphorsäure, 2,2,12,12-Tetramethyl-5,9-dihydroxy-3,7,11-trithiatridecan und 2,2,15,1 5-Tetramethyl-5,12-dihydroxy--3,7,10,1 4-tetrathiahexadecan.

### Beispiele für Metall-Desaktivatoren, z.B. für Kupfer, sind:

a) Benzotriazole und deren Derivate, z.B. 4- oder 5-Alkylbenzotriazole (z.B. Tolutriazol) und deren Derivate, 4,5,6,7-Tetrahydrobenzotriazol, 5,5'-Methylen-bis-benzotriazol; Mannich-Basen von Benzotriazol oder Tolutriazol wie 1-[Di(2-ethylhexyl)aminomethyl)-tolutriazol und 1-[Di(2-ethylhexyl)aminomethyl)-benzotriazol; Alkoxyalkylbenzotriazole wie 1-(Nonyloxymethyl)-benzotriazol, 1-(1-Butoxyethyl)-benzotriazol und 1-(1-Cyclohexyloxybutyl)-tolutriazol.
b) 1,2,4-Triazole und deren Derivate, z.B. 3-Alkyl (oder Aryl)- 1,2,4-Triazole, Mannich-Basen von 1,2,4-Triazolen wie 1-[Di(2-ethylhexyl)aminomethyl-1,2,4-triazol; Alkoxyalkyl-1,2,4-triazole wie 1-(1-Butoxyethyl-1,2,4-triazol; acylierte 3-Amino-1,2,4-triazole,
c) Imidazolderivate, z.B. 4,4'-Methylenbis(2-undecyl-5-methylimidazol, Bis[(N-methyl)imidazol-2-yl]carbinol-octylether.
d) Schwefelhaltige heterocyclische Verbindungen, z.B. 2-Mercaptobenzothiazol, 2,5-Dimercapto-1,3,4-thiadiazol, 2,5-Dimercaptobenzothiadiazol und deren Derivate; 3,5-Bis[di(2-ethylhexyl)amino-methyl]-1 ,3,4-thiadiazolin-2-on.
e) Aminoverbindungen, z.B. Salicyliden-propylendiamin, Salicylaminoguanidin und deren Salze.

### Beispiele für Rost-lnhibitoren sind:

a) Organische Säuren, ihre Ester, Metallsalze, Aminsalze und Anhydride, z.B. Alkyl- und Alkenyl-bernsteinsäuren und deren Partialester mit Alkoholen, Diolen oder Hydroxycarbonsäuren, Partialamide von Alkyl- und Alkenylbemsteinsäuren, 4-Nonylphenoxyessigsäure, Alkoxy- und Alkoxyethoxycarbonsäuren wie Dodecyloxyessigsäure, Dodecyloxy-(ethoxy)-essigsäure und deren Aminsalze, femer N-Oleoyl-sarcosin, Sorbitan-mono-oleat, Blei-naphthenat, Alkenylbernsteinsäureanhydride, z.B. Dodecenylbernsteinsäure-anhydrid, 2-(2-Carboxyethyl)-1-dodecyl-3-methylglycerin und dessen Salze, insbesondere Na- und Triethanolaminsalze.
b) Stickstoffhaltige Verbindungen, z.B.:
   I. Primäre, sekundäre oder tertiäre aliphatische oder cycloaliphatische Amine und Amin-Salze von organischen und anorganischen Säuren, z.B. öllösliche Alkylammoniumcarboxylate, ferner 1-[N, N-bis-(2-hydroxyethyl)amino]-3-(4-nonylphenoxy)propan-2-ol.
   II. Heterocyclische Verbindungen, z.B.: Substituierte Imidazoline und Oxazoline, 2-Heptadecenyl-1 -(2-hydroxyethyl)-imidazolin.
c) Phosphorhaltige Verbindungen, z.B.:
   Aminsalze von Phosphorsäurepartialestern oder Phosphonsäurepartialestem, Zinkdialkyldithiophosphate.
d) Schwefelhaltige Verbindungen, z.B.: Barium-dinonylnaphthalin-sulfonate, Calciumpetroleum-sulfonate, Alkylthio-substituierte aliphatische Carbonsäuren, Ester von aliphatischen 2-Sulfocarbonsäuren und deren Salze.
e) Glycerinderivate, z.B.: Glycerin-monooleat, 1-(Alkylphenoxy)-3-(2-hydroxyethyl)-glycerine, 1-(Alkylphenoxy)-3-(2,3-dihydroxypropyl)glycerine, 2-Carboxyalkyl-1,3-dialkylglycerine.

Beispiele für Viskositätsindex-Verbesserer sind: Polyacrylate, Polymethacrylate, Vinylpyrrolidon/Methacrylat-Copolymere, Polyvinylpyrrolidone, Polybutene, Olefin-Copolymere, Styrol/Acrylat-Copolymere, Polyether.

Beispiele für Stockpunktemiedriger sind: Polymethacrylat, alkylierte Naphthalinderivate.

Beispiele für Dispergiermittel/Tenside sind: Polybutenylbernsteinsäureamide oder -imide, Polybutenylphosphonsäurederivate, basische Magnesium-, Calcium-, und Bariumsulfonate und -phenolate.

### Beispiele für Hochdruck- und Verschleißschutz-Additive sind:

Schwefel- und/oder Phosphor- und/oder halogenhaltige Verbindungen wie. z.B. chlorierte Paraffine, sulfurierte Olefine oder pflanzliche Öle (Soja-, Rapsöl), Alkyl- oder Aryl-di- oder - trisulfide, Zinkdialkyldithiophosphate, Zinkdithiocarbamate wie Zinkdiamyldithiocarbamat, Molybdänphosphordithioate, Molybdän Dithiocarbamate, Triarylphosphate wie Tritolylphosphat, Tricresylphosphat, Phenylphosphatisopropylester, Aminsalze von Mono- oder Dialkyl-phosphorsäuren wie die Aminsalze von Mono/Di-hexylphosphat, Aminsalze von Alkylphosphonsäuren wie das Aminsalz der Methylphosphonsäure, Triarylphosphite wie Tris-[nonyl-phenyl]-phosphit, Dialkylphosphite wie Dioctylphosphit, Triarylmonothiophosphate wie Triphenylthionophosphat oder Tris-[isononylphenyl]thionophosphat oder tert-butyliertes Triphenylthionophosphate, substitutierte Trialkylmono- oder dithiophosphate wie [(Diisopropoxyphosphinothioyl)thio]propionat oder Butylen-1,3-bis[(diisobutoxyphosphinothioyl)propionat], Trithiophosphate wie Trithiophosphosäure S,S,S-tris(isooctyl-2-acetate), Aminsalze des 3-Hydroxy-1,3-thiaphosphetane-3-oxids, Benzotriazole oder derem Derivate wie bis(2-Ethylhexyl)aminomethyltolutriazol, Dithiocarbamate wie Methylen-bis-dibutyldithiocarbamat, Derivate des 2-Mercaptobenzothiazols wie 1-[N,N-bis(2-ethylhexyl)-aminomethyl]-2-mercapto-1H-1,3-benzothiazol, Derivate des 2,5-dimercapto-1 ,3,4-thiadiazols wie 2,5-bis(tert.nonylditdithio)-1,3,4-thiadiazol.

Beispiele für Reibwertverminderer, z.B. Öl aus Schmalz, Ölsäure, Talg, Rapsöl, geschwefelte Fette, Amine. Weitere Beispiele sind in EP 565487 genannt.

### Beispiele für besondere Additive zur Anwendung in Wasser/Öl-Metallbearbeitungs- und Hydraulikflüssigkeiten sind:

Emulgatoren: Petroleumsulfonate, Amine wie polyoxyethylierte Fettamine, nichtionische oberflächenaktive Substanzen; Puffer: Alkanolamine; Biocide: Triazine, Thiazolinone, Tris-Nitromethan, Morpholin, Natriumpyridenethol; Verarbeitungsgeschwindigkeitsverbesserer: Calcium- und Bariumsulfonate;

### Beispiele für Treibstoffadditive:

Solche sind in Kirk-Othmer, Encyclopedia of Chemical Technology, Vol. 12, 1994, beschrieben. Hier handelt es sich im wesentlichen um Benzin- und Dieseladditive:

### Benzin: Farbstoffe, besonders Azofarbstoffe;

Antioxidantien, aminisch, besonders para-Phenylendiamine, oder phenolisch, z.B. 2,6-Ditert-butylphenol, wie oben beschrieben;

Metalldesaktivatoren, besonders N,N'-Disalicyliden-1,2-propan, Benzotriazol, EDTA.

Rostinhibitoren, beispielsweise: Carbonsäuren, Sulfonate, Amine oder Aminsalze; Dispergatoren, z.B. Ester, Amine mit hohem Molekulargewicht, Mannich Basen, Succinimide, borierte Succinimide.

Detergentien, beispielsweise: Fettsäureamide, nichtpolymere Amine, Polybutensuccinimide, Polyetheramine, niedermolekulare Amine, Sulfonate, Salicylsäurederivate,

Demulgatoren, beispielsweise langkettige Alkohole oder Phenole mit Polyethylen oder -butylengruppen.

Antiklopfmittel: Tetralkylblei, Manganmethylcyclopentadienyltricarbonyl.

Sauerstoffverbindungen: Ester von Pflanzenölen, Ether, Alkohole zur Verbesserung des Brennverhaltens.

### Diesel:

Zündverbesserer (Cetanverbesserer), z.B Alkylnitrate, Ethemitrate, Alkyldiglycolnitrate, organische Peroxide;

Stabilisatoren für insbesondere Crackdiesel: Amine und andere N-Haltige Verbindungen, die als Radikalfänger wirken.

Rostschutzmittel, wie oben beschrieben;

Detergentien wie oben beschrieben;

Sauerstoffverbindungen wie oben beschrieben

Kaltflussverbessererer: Das sind z.B. Stockpunkterniedriger (siehe oben), Trübpunkterniedriger oder sog. Operability Additives (OA), das sind polymere Mehrkomponentensysteme, welche u.a. das Filterdurchflussverhalten verbessern.

Die folgenden Beispiele erläutern die Erfindung näher. Angaben in Teilen und Prozent sind auf das Gewicht bezogen, sofern nicht anders angegeben.

*Beispiel 1:* Eine Mischung von 10,0 g Polyoctenamer (Vestenamer® L 3000, M_{w} ≈ 3000, Hüls) und 21,2 g Diisopropyldithiophosphorsäure wird 17 Stunden bei 100°C gerührt. Das Rohprodukt wird mit 100 ml ToluoVHexan (50:50) verdünnt, mit NaOH (2 N) auf pH 10 eingestellt und dann mit 3 x 30 ml Natriumsulfat-Lösung (5 %) gewaschen (pH 8). Die trübe organische Phase wird mit wenig Filterhilfsmittel (Hyflo®) klarfiltriert und eingedampft. Man erhält 24,0 g klares, schwachgelbes, viskoses Öl. Elementaranalyse: [P] = 9,4 %; [S] = 18,5 %.

*Beispiel 2:* Eine Mischung von 10,8 g linearem Polybutadien (Krasol® LB 3000, Mₙ ≈ 2300-3000, Kaucuk) und 53,0 g Diisobutyldithiophosphorsäure wird mit 30 ml Toluol verdünnt und 11 Stunden bei 100°C gerührt. Die mittelviskose Rohproduktlösung wird mit 50 ml Siedegrenzbenzin (Sdp. 80-110°C) verdünnt, mit NaOH (1 N) auf pH 10 eingestellt und mit 3 x 50 ml Wasser neutral gewaschen und am Rotationsverdampfer eingedampft. Man erhält 48,2 g schwach trübes, hochviskoses Öl. Elementaranalyse: [P] = 9,7 % ; [S] = 19,4 %.

*Beispiel 3:* Eine Mischung von 10,8 g linearem Polybutadien (KRASOL LB 3000) und 45,9 g Diisopropyldithiophosphorsäure wird mit 30 ml Toluol verdünnt und bei 100°C 11 Stunden gerührt. Die mittelviskose Rohproduktlösung wird mit 50 ml Siedegrenzbenzin (Sdp. 80-100°C) verdünnt, mit NaOH (1 N) auf pH 10 gebracht, mit 3x 50 ml Wasser neutral gewaschen und am Rotationsverdampfer eingedampft. Man erhält 38,2 g klares, hochviskoses Öl. Elementaranalyse:[P] = 11,0 %; [S] = 21,1 %.

*Beispiel 4:* Zu einer Mischung von 108 g linearem Polybutadien (KRASOL LB 3000) und 213 g tert. Dodecylmercaptan wird bei 100°C innerhalb 4 Stunden eine Lösung von 3,4 g α-Azoisobutyronitril in 200 ml Toluol zugetropft und weitere 4 Std. bei 100°C ausreagieren gelassen. Die Lösung wird eingedampft. Bei 120°C/0,02 mbar wird das überschüssige tert.-Dodecylmercaptan abdestilliert. 208 g Rückstand werden mit 252 g Diisobutyldithiophosphorsäure in 200 ml Toluol gelöst. Die Lösung wird bei 100°C 12 Stunden lang gerührt. Das Rohprodukt wird mit 200 ml Essigsäureethylester verdünnt und mit NaOH (2N) auf pH 8,1 gebracht. Es wird mit Wasser neutral gewaschen und eingedampft. Das Produkt wird mit 3 x ca. 150 ml Ethanol gewaschen/extrahiert und am Vakuum getrocknet. Man erhält 354 g klares, gelbes, viskoses Öl. Elementaranalyse: [P] = 5,3 %; [S] = 15,8 %.

*Beispiel 5:* Zu einer Mischung von 10,8 g linearem Polybutadien (KRASOL LB 3000) und 21,3 g tert. Dodecylmercaptan bei 100°C wird eine Lösung von 0,340 g α-Azoisobutyronitril in 20 ml Toluol innerhalb 4 h zugetropft. Man läßt 1 Stunde bei 100°C ausreagieren. 20,4 g Thioglycolsäureisooctylester (IOMA) werden zugegeben. Eine Lösung von 0,340 g α-Azoisobutyronitril in 20 ml Toluol wird innerhalb von 3 Stunden bei 100°C zugetropft. Man läßt 1 Stunde bei 100°C ausreagieren, dampft ein und wäscht/extrahiert das Rohprodukt mit 3x je ca. 40 ml Ethanol abs. (-22,7 g). Man erhält 26,1 g hellgelbes, viskoses Öl. 24 g dieses Zwischenproduktes werden mit 22,7 g Diisobutyldithiophosphorsäure in 20 ml Toluol gelöst und 12 h bei 100°C gerührt. Nach Eindampfen wird 4x mit ca. 40 ml Ethanol gewaschen/extrahiert. Man erhält 31,1 g viskoses, gelbes Öl. [P] = 3,7 %; [S] = 14,3 %.

*Beispiel 6:* Zu einer Mischung von 130 g linearem Polybutadien (KRASOL LB 3000) und 91 g tert-Nonylmercaptan wird bei 100°C innerhalb von 2 Stunden eine Lösung von 4,1 g alpha-Azoisobutyronitril in 240 ml Toluol zugetropft und eine weitere Stunde bei 100°C ausreagieren gelassen. 98 g Thioglycolsäureisooctylester (IOMA) und 6,8 g Thioglycolsäure werden zugegeben. Bei 100°C werden weitere 4,1 g alpha-Azosiobutyronitril in 240 ml Toluol innerhalb von 2 Stunden zugetropft. Man läßt wieder 1 Stunde lang ausreagieren. Das Rohprodukt wird mit 600 ml Methanol gefällt, mit 3 x 400 ml Methanol gewaschen/extrahiert und am Vakuum getrocknet: Man erhält 271 g viskoses, hellgelbes, klares Öl. Elementaranalyse: [S] = 10,2 %.

*Beispiel 7:* Test auf Verschleißschutz: Zur Prüfung auf die Eignung als Verschleißschutzadditiv wird die ASTM-Standardmethode D-2783-81 unter Verwendung des Shell-Vierkugel-Apparates herangezogen. Als Basisöl wird STOCK 305 der Fa. Mobil verwendet, dem die in Tabelle I angegebene Menge an Verbindung gemäß dem jeweils genannten Beispiel zugegeben wird. Ermittelt werden der mittlere Verschleiß-Narben-Durchmesser WSD (Wear-Scar- Diameter, in mm) bei einer Last von 40 kg und einer Rotationsgeschwindigkeit von 1440 UpM nach 1 Std. Betrieb bei 100°C.

Die gemessenen Resultate sind in der Tabelle aufgeführt.

**Tabelle**

| Verbindung aus Beispiel | Zusatzmenge [ Gew. % ] | WSD [ mm ] |
|---|---|---|
| Basisöl | - | 2,32 |
| KRASOL LB 3000 | 1,0 | 0,95 |
| 1 | 1,0 | 0,60 |
| 2 | 1,0 | 0,77 |
| 3 | 1,0 | 0,70 |
| 4 | 1,0 | 0,67 |
| 5 | 1,0 | 0,80 |
| 6 | 1,0 | 0,66 |

Geringe WSD-Werte bedeuten einen guten Verschleißschutz.

## Patentansprüche

1. Produkt erhältlich durch Umsetzung eines mehrfach ungesättigten Polymers mit mindestens einer enophilen Verbindung aus den Gruppen der Dihydrocarbyldithiophosphorsäuren, Dihydrocarbylmonothiophosphorsäuren, Dihydrocarbylphosphorsäuren und Mercaptane.

2. Produkt nach Anspruch 1, worin die enophile Verbindung eine Verbindung der Formel: 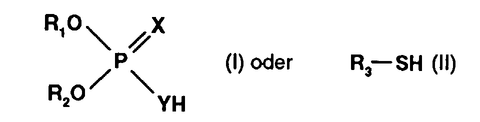 ist, worin X und Y unabhängig voneinander S oder O;
R¹ und R² unabhängig voneinander C₃-C₁₈-Alkyl, C₅-C₁₂-Cycloalkyl, C₅-C₆-Cycloalkylmethyl, C₉-C₁₀ Bicycloalkylmethyl, C₉-C₁₀-Tricycloalkylmethyl, Phenyl, C₇-C₂₄-Alkylphenyl oder R¹ und R² zusammen die Gruppe der Teilformel: 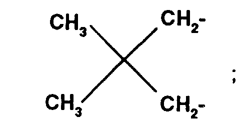
R³ unsubstituiertes oder mit OH oder/und COOH substituiertes C₁-C₂₂-Alkyl, oder durch -O-, -S-, -NR⁴-, -C(=O)-, -C(=O)-O-, -O-(C=O)- oder -C(=O)-NR₄- unterbrochenes C₂-C₂₂-Alkyl; und R⁴ H oder C₁₋₁₈-Alkyl sind.

3. Produkt nach Anspruch 2, worin eine der Gruppen X und Y Schwefel oder beide Gruppen Schwefel sind.

4. Produkt nach Anspruch 2, worin R¹ und R² unabhängig voneinander C₃₋₁₈-Alkyl, C₅₋₆-Cycloalkyl oder C₇₋₁₈-Alkylphenyl sind, und R³ C₃-C₁₈ -Alkyl oder mit -COOH oder -OH substituiertes C₁-C₁₂-Alkyl oder durch -C(=O)-O- unterbrochenes C₃-C₁₈-Alkyl ist.

5. Produkt nach Anspruch 2, worin R¹ und/oder R₂ i-Propyl, i-Butyl oder 2-Ethylhexyl bedeuten, und R³ für C₃-C₁₈-Alkyl , -CH₂-C(=O)-OH, -CH₂-CH₂-C(=O)-OH, -CH₂-C(=O)-O-C₁,-C₁₂-Alkyl, -CH₂-CH₂-C(=O)-O-C₁-C₁₂-Alkyl oder -CH₂CH₂OH steht.

6. Produkt nach Anspruch 1, worin das Polymer ein Molekulargewicht Mₙ von 500 - 500 000 aufweist.

7. Produkt nach Anspruch 6, wobei das Polymer Polybutadien, Polyisopren, ringöffnend polymerisiertes Polycyclooctenamer oder Polynorbomen ist.

8. Produkt nach Anspruch 6, wobei das Polymer mit mindestens 2 enophilen Verbindungen der Formeln I und/oder II umgesetzt wird.

9. Zusammensetzung enthaltend einen Schmier- oder Kraftstoff sowie ein Produkt gemäß Anspruch 1.

10. Zusammensetzung nach Anspruch 9 enthaltend einen Stoff aus den Gruppen der Motorenöle, Turbinenöle, Getriebeöle, Hydraulikflüssigkeiten, Metallbearbeitungsflüssigkeiten, Schmierfette, Diesel- oder Ottokraftstoffe sowie mindestens ein Produkt gemäß Anspruch 1.

11. Konzentrate enthaltend ein oleophiles Lösungsmittel und mindestens ein Produkt gemäß Anspruch 1.

12. Verfahren zur Verbesserung der Gebrauchseigenschaften von Schmier- oder Kraftstoffen, gekennzeichnet durch die Zugabe mindestens eines Produkts gemäß Anspruch 1.

13. Verwendung von Produkten gemäß Anspruch 1als Additive in Motorenölen, Turbinenölen, Getriebeölen, Hydraulikflüssigkeiten, Metallbearbeitungsflüssigkeiten, Schmierfetten oder Diesel- oder Ottokraftstoffen.
